# EUROPEAN PATENT APPLICATION

(11) **EP 4 464 577 A1**
(43) Date of publication of application: **20.11.2024**
(21) Application number: 23174007.7
(22) Date of filing: 17.05.2023
(51) Int. Cl.: B62D 25/14, B62D 65/02, B62D 65/14

(54) **A TOOL AND A METHOD FOR MOUNTING A COCKPIT TO THE BODY-IN-WHITE OF A MOTOR VEHICLE CAB**

(71) Applicant: VOLVO TRUCK CORPORATION, 405 08 Göteborg (SE)
(72) Inventor: OISHI, Manoli, 69200 VENISSIEUX (FR); ALLIO, Stephane, 69680 Chassieu (FR)
(74) Representative: Germain Maureau

(57) **Abstract**

The invention relates to a tool (10) for mounting a cockpit (3) to a body-in-white (4) of a motor vehicle cab (5), the cockpit (3) comprising a crosspiece (1) extending in a vehicle transverse direction (Y) and a dashboard (2), the tool (10) comprising:
- a support plate (11);
- a left centering pin (12, 12', 14-16) extending in a longitudinal direction (X) perpendicular to the support plate and configured to be inserted into two corresponding left positioning holes (9, 19) formed respectively in the crosspiece (1) and the body-in-white (4) ;
- a right centering pin (12, 12', 14'-16') extending in a direction (X) perpendicular to the support plate and configured to be inserted into two corresponding right positioning holes (9', 19') formed respectively in the crosspiece (1) and the body-in-white (4);
wherein one of the said left centering pin (12, 12', 14-16) and said right centering pin (12, 12', 14'-16') has a circular cross-section and the other of said left centering pin (12, 12', 14-16) and said right centering pin (12, 12', 14'-16') has a special cross-section having its greatest overall dimension parallel to the vehicle transverse direction (Y)

## Description

### TECHNICAL FIELD

The disclosure relates generally to the mounting of a cockpit to the body-in-white of a motor vehicle cab. In particular aspects, the disclosure relates to a tool and a method for mounting a cockpit to the body-in-white of a motor vehicle cab. The disclosure can be applied in heavy-duty vehicles, such as trucks, buses, and construction equipment. Although the disclosure may be described with respect to a truck, the disclosure is not restricted to any particular vehicle.

### BACKGROUND

The front part of a motor vehicle driver compartment is delimited by a dashboard that is supported by a crosspiece, also known as Cross-Truck-Beam (CTB); which is at least partly metallic and forms a structural element of the vehicle. The assembly formed by the crosspiece and the dashboard, called the "cockpit", has a structural mechanical function and serves as a support for numerous elements including aeraulic elements, such as air ducts or a ventilation system and/or or air conditioning. Such aeraulic elements can also form part of the cockpit.

In order to ensure the stability of the crosspiece, and therefore of the cockpit, after its assembly, this crosspiece must be positioned precisely with respect to the structure of the vehicle.

The centering of the crosspiece with respect to the structure of the vehicle is generally carried out by an assistance tool that carries the cockpit or the crosspiece and positions it with respect to the structure of the vehicle by using specific sensors to measure the gap between the cockpit and the lateral extremities of the vehicle structure as a reference. Once correctly positioned, the crosspiece is fixed by its ends to the structure of the vehicle. Such a method is relatively complex and expensive in terms of invest. In addition, it may require dedicated additional actuators to adjust the position of the cockpit, which increases the assembly costs.

Another existing method involves two centering pins, respectively a left centering pin and a right centering pin, hold by the structure of the vehicle, said centering pins being received in corresponding holes formed in the crosspiece of the cockpit, respectively a circular hole on the left side thereof and an oblong hole on the right side thereof. The left centering pin has a shape substantially complementary to the one of the circular hole, thus centering the cockpit both in a vehicle vertical direction and in a vehicle transverse direction, and the right centering pin has a cylindrical shape that contacts the crosspiece only in two points aligned in a vehicle vertical direction, thus centering the cockpit only in said vehicle vertical direction. Such a method is however adapted for a Left Hand Drive (LHD) vehicle, but not for a Right Hand Drive (RHD) vehicle. The RHD vehicles need to invert the position of the holes on the cockpit with respect to LHD vehicles to keep the same centering accuracy. Such method thus requires dedicated stamping tools for forming the holes in the crosspiece of a RHD vehicle, which increases the global costs supported by the automotive manufacturers.

There is therefore a need for a new tool and a new method for mounting a cockpit to a vehicle structure with precise positioning of the cockpit relative to a vehicle structure, this positioning being obtained in a simple, safe and inexpensive manner.

The invention aims to overcome these drawbacks by proposing a tool for mounting a cockpit to a body-in-white of a motor vehicle cab, the cockpit comprising a crosspiece extending in a vehicle transverse direction and a dashboard, the tool comprising:
- a support plate ;
- a left centering pin extending in a longitudinal direction perpendicular to the support plate and configured to be inserted into two corresponding left positioning holes formed respectively in the crosspiece and the body-in-white ;
- a right centering pin extending in a direction perpendicular to the support plate and configured to be inserted into two corresponding right positioning holes formed respectively in the crosspiece and the body-in-white ;
wherein one of the said left centering pin and said right centering pin has a circular cross-section and the other of said left centering pin and said right centering pin has a special cross-section having its greatest overall dimension parallel to the vehicle transverse direction.

### SUMMARY

According to a first aspect of the disclosure, the disclosure relates to a tool for mounting a cockpit to a body-in-white of a motor vehicle cab, the cockpit comprising a crosspiece extending in a vehicle transverse direction and a dashboard, the tool comprising:
- a support plate ;
- a left centering pin extending in a longitudinal direction perpendicular to the support plate and configured to be inserted into two corresponding left positioning holes formed respectively in the crosspiece and the body-in-white ;
- a right centering pin extending in a direction perpendicular to the support plate and configured to be inserted into two corresponding right positioning holes formed respectively in the crosspiece and the body-in-white ;
wherein one of the said left centering pin and said right centering pin has a circular cross-section and the other of said left centering pin and said right centering pin has a special cross-section having its greatest overall dimension parallel to the vehicle transverse direction.

Thus configured, the tool of the disclosure makes it possible to precisely position the crosspiece of a cockpit relative to the body-in-white of a motor vehicle cab before fixing it thereon. In particular, one of the centering pins of the tool has a specific shape that blocks the position of the crosspiece relative to the body-in-white along a transverse direction and a vertical direction but allows a slight rotation of said crosspiece about a longitudinal axis. This slight rotation avoids worn during the insertion of the centering pin in the corresponding positioning hole of the crosspiece when the crosspiece and/or the body-in-white are slightly inclined relative to an ideal mounting position in which one of the positioning holes are in contact with one of the centering pins of the tool in two points aligned in a vehicle vertical direction and in two points aligned in a vehicle transverse direction.

The disclosure makes it possible to overcome the need to use a complex assistance tool to achieve the positioning of the cockpit relative to the vehicle. This thus makes it possible to reduce the costs of assembly, manufacture and maintenance of an assistance tool, the latter being necessary only to support the cockpit or the crosspiece of the cockpit.

Furthermore, the tool of the disclosure may be easily modified to invert the positions of the left and right centering pins, thus offering the same centering accuracy for both LHD and RHD vehicles.

In some examples, the other one of the said left centering pin and of the said right centering pin is defined by upper and lower curved peripheral areas and left and right curved peripheral areas, the upper and lower curved peripheral areas having, in a section plane parallel to the vertical plane, a circular arc shape inscribed in a first circle, the diameter of the first circle corresponding substantially to the dimension of the corresponding left or right positioning holes along a vehicle vertical direction, and the left and right curved peripheral areas having, in a section plane parallel to the vertical plane, a circular arc shape inscribed in a second circle, the diameter of the second circle corresponding substantially to the dimension of the corresponding left or right positioning holes along a vehicle transverse direction.

In some examples, the upper, respectively the lower, curved peripheral area is linked to the left, respectively the right, curved peripheral area via a planar peripheral area.

In some examples, the first and the second circles have the same center.

In some examples, the left centering pin and the right centering pin are removably attached to the support plate.

In some examples, the left centering pin or the right centering pin is made of a first, a second and a third parallel spindles, wherein the first spindle is fixedly attached to the support plate and the second and third spindles are slidably fixed to the support plate such that they are movable between a deployed position, in which they extend at both sides of a top portion of the first spindle, and a retracted position, in which they extend at both sides of a bottom portion of the spindle.

In some examples, the second and third spindles are configured to be housed into the left or right positioning hole formed respectively in the crosspiece and the body-in-white in the mounting position of the tool and when they are in their deployed position, and to be out of said left or right positioning hole in the mounting position of the tool and when they are in their retracted position.

In some examples, the first spindle has a cylindrical shape, the diameter of the first spindle corresponding substantially to the dimension of the left or right positioning hole along a vehicle vertical direction,
wherein the second spindle is defined by a left curved peripheral area having, in a section plane parallel to the vertical plane, a circular arc shape inscribed in a first circle, said first circle having a first center and a first radius,
wherein the third spindle is defined by a right curved peripheral area having, in a section plane parallel to the vertical plane, a circular arc shape inscribed in a second circle, said second circle having a second center and a second radius, and
wherein the distance between the first and the second centers is substantially equal to the dimension of the left or right positioning hole along a vehicle transverse direction minus the first and second radii.

In some examples, the first and the second circles have the same radius.

In some examples, the special cross-section has two axes of symmetry that are crossing by the center of the section and that are respectively parallel to the vehicle transverse direction and to a vertical axis perpendicular to the vehicle longitudinal and transverse directions.

In some examples, each of the left and right centering pins has a tapered end for optimum engagement into the corresponding holes.

In some examples, the special cross-section is such that it can be circumscribed inside a rectangle.

According to a second aspect of the disclosure, the disclosure relates to a method for mounting a cockpit to a body-in-white of a motor vehicle cab, the cockpit comprising a crosspiece extending in a vehicle transverse direction and a dashboard, the crosspiece and the body-in-white being respectively provided with left and right positioning holes, said left and right positioning holes having preferably an oblong shape and being preferably defined by a larger dimension along a vehicle transverse direction than along a vehicle vertical direction, the method comprising:
- moving a tool according to any of the embodiments set forth herein above until the left, respectively right, centering pin is inserted in the left, respectively right, positioning hole of the crosspiece ;
- moving the tool, holding the crosspiece, until the left, respectively right, centering pin is inserted in the left, respectively right, positioning hole of the body-in-white ;
- fastening the crosspiece to the body-in-white ;
- moving the tool along a longitudinal axis until the left, respectively right, centering pin is out of the left, respectively right, positioning holes of the crosspiece and of the body-in-white.

According to a third aspect of the disclosure, the disclosure relates to a motor vehicle cab comprising a body-in-white and a dashboard fixedly connected thereto through a crosspiece extending in a vehicle transverse direction, wherein the crosspiece and the body-in-white each comprises a left mounting interface and a right mounting interface, said left mounting interface, respectively said right mounting interface, being provided with a left positioning hole, respectively a right positioning hole, said left and right positioning holes having each an oblong shape.

In some examples, the oblong shape of the left and right positioning holes is defined by a larger dimension along the vehicle transverse direction than along a vehicle vertical direction.

In some examples, the left and right positioning holes of the body-in-white have the same shape as the left and right positioning holes of the crosspiece.

In some examples, the left and right positioning holes of the crosspiece and of the body-in-white have a substantially rectangular shape in a section plane perpendicular to a vehicle longitudinal direction.

According to a fourth aspect of the disclosure, the disclosure relates to a motor vehicle comprising a motor vehicle cab according to any of the embodiments set forth herein above.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

### BRIEF DESCRIPTION OF THE DRAWINGS

With reference to the appended drawings, below follows a more detailed description of aspects of the disclosure cited as examples.
**FIG. 1** is a rear perspective view of a crosspiece of a cockpit.
**FIG. 2** is a rear perspective view of a cockpit.
**FIG. 3** is a perspective view, from the inside of a motor vehicle cab, of a forward portion of the cab including the cockpit of Fig. 2.
**FIG. 4a** and **FIG. 4b** are top views of the respectively left and right ends of a mounting tool according to a first embodiment of the invention.
**FIG. 5a** and **FIG. 5b** are front views of the respectively left and right ends illustrated in Figs 4a and 4b.
**FIG. 6a** and **FIG. 6b** are top views of the respectively left and right ends of a mounting tool according to a second embodiment of the invention.
**FIG. 7a** and **FIG. 7b** are front views of the respectively left and right ends illustrated in Figs 6a and 6b.
**FIG. 8** is an enlarged view of the left end illustrated in Fig. 5a in a first mounting position of the tool.
**FIG. 9** is an enlarged view of the left end illustrated in Fig. 5a in a second mounting position of the tool.
**FIG. 10a** and **FIG. 10b** are top views of the respectively left and right ends of a mounting tool according to a third embodiment of the invention.
**FIG. 11a** and **FIG. 11b** are front perspective views of the respectively left and right ends illustrated in Figs 10a and 10b.
**FIG. 12** is an enlarged front view of the left end illustrated in Fig. 11a in a first mounting position of the tool.
**FIG. 13** is an enlarged front view of the left end illustrated in Fig. 11a in a second mounting position of the tool.

### DETAILED DESCRIPTION

Aspects set forth below represent the necessary information to enable those skilled in the art to practice the disclosure.

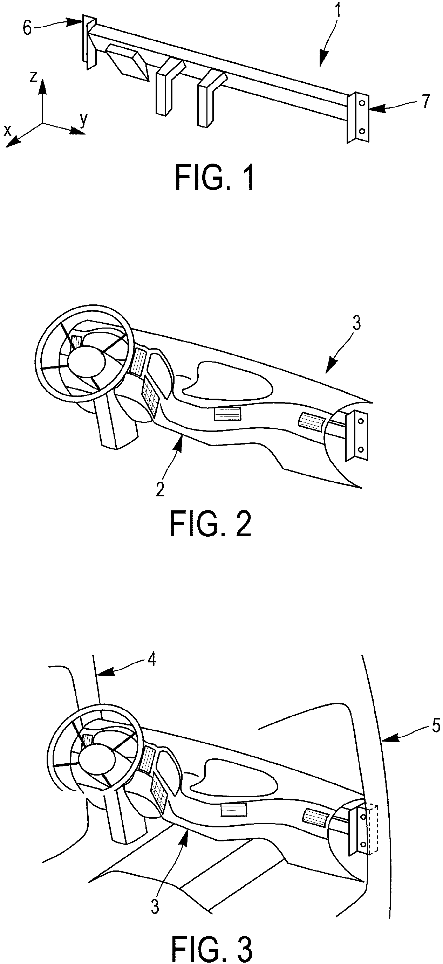

**FIG. 1** illustrates a crosspiece 1, also known as Cross Truck Beam (CTB), which is suitable for supporting a dashboard 2 of a cockpit 3, illustrated in **FIG. 2**, the dashboard 2 supported by the cross-piece 1 being fixed to the body-in-white (BIW) 4 of a cab 5 of an industrial vehicle, as illustrated in **FIG. 3****.**

The dashboard 2 may include one or more subset chosen among a heating, ventilating and air-conditioning unit, a control pedals unit, a steering column unit, an electric control unit, and an airbag unit.

The crosspiece 1 extends along a vehicle transverse direction Y and comprises, at each of its ends, a fixing interface 6, 7 configured to be attached to the body-in-white 4 of the vehicle. Such as represented in the example of Fig. 1, each fixing interface 6, 7 may have a flat shape with a rectangular basis that cooperates with respective flat fixing areas of the body-in-white 4. The fixing interfaces 6, 7 and the corresponding fixing areas may have several through-holes, which have corresponding locations for the passage of bolts (not shown). These bolts enable fixing the crosspiece 1 to the body-in-white 4.

Alternatively, the crosspiece 1 could be fixed on the body-in-white 4 by any means equivalent to bolts, like e.g. welding, rivets, glue areas, clip fixing devices, etc.

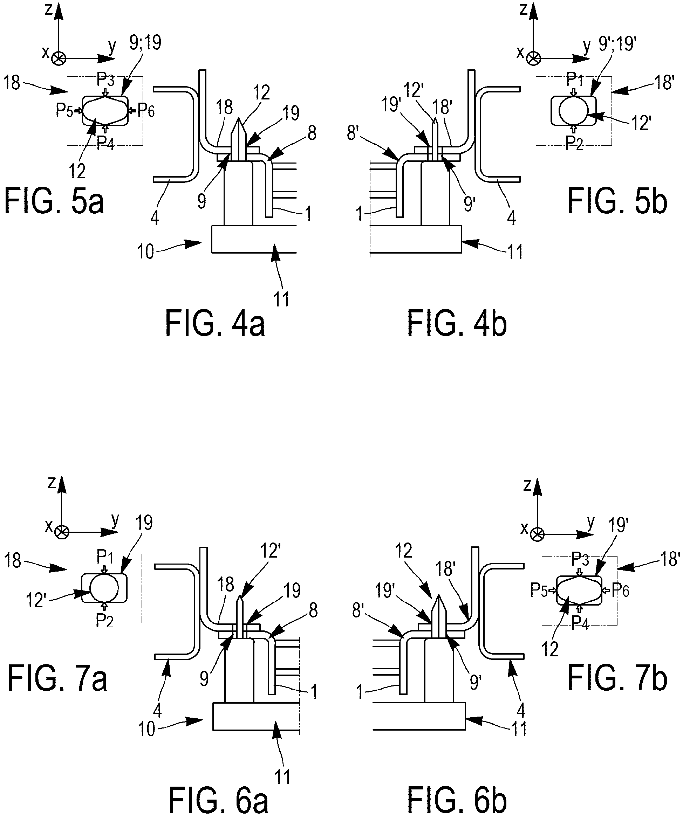

As illustrated in **FIG. 4a** and **FIG. 4b****,** the crosspiece 1 and the body-in-white 4 comprises a left mounting interface 8, respectively 18, and a right mounting interface 8', respectively 18', allowing the crosspiece 1 to be temporary connected on a mounting tool 10. The left, respectively the right, mounting interface 8, 8' of the crosspiece 1 is provided with a left, respectively a right, positioning hole 9, 9', said positioning holes 9, 9' having a substantially rectangular shape in a section plane parallel to the vertical plane, as shown in **FIG. 5a** and **FIG. 5b****.** Said rectangular shape is defined by a larger dimension along a vehicle transverse direction Y than along a vehicle vertical direction Z. The left, respectively the right, mounting interface 18, 18' of the body-in-white 4 is provided with a left, respectively a right, positioning hole 19, 19', said positioning holes 19, 19' having the same shape as the positioning holes 9, 9' in a section plane parallel to the vertical plane.

In the embodiment shown in Figs 4a and 4b, the tool 10 comprises a support plate 11 extending in a vertical plane, and one left centering pin 12 and one right centering pin 12' extending in a direction perpendicular to the vertical plane. The centering pins 12, 12' are configured to be respectively inserted into the left, respectively the right, positioning holes 9, 19, 9', 19' formed respectively in the crosspiece 1 and the body-in-white 4 in a mounting position of the tool 10, illustrated in Figs 4a and 4b. The centering pins 12, 12' may advantageously be provided with a tapered end for optimum engagement into the corresponding positioning holes.

In the embodiment of Figs 5a and 5b, the right centering pin 12' has a cylindrical shape and is configured to contact the crosspiece 1, respectively the body-in-white 4, in two points P1, P2 aligned in a vehicle vertical direction in the mounting position of the tool 10, thus preventing a movement of the right centering pin 12' relative to the crosspiece 1 and the body-in-white 4 along said vehicle vertical direction. In other words, once fitted into the corresponding holes, said right centering pin provides an axial stop along vertical direction. The left centering pin 12 has an oblong cross-section, e.g. of trapezoid shape that is partially complementary to the shape of the left positioning holes 9, 19 and is configured to contact the crosspiece 1, respectively the body-in-white 4, in two points P3, P4 aligned in a vehicle vertical direction and in two points P5, P6 aligned in a vehicle transverse direction in the mounting position of the tool 10, thus preventing a movement of the left centering pin 12 relative to the crosspiece 1 and the body-in-white 4 along said vehicle vertical direction and said vehicle transverse direction. This special cross-section is defined by two axes of symmetry that are crossing by the center of the section and that are respectively parallel to the vehicle transverse direction Y and to a vertical axis Z perpendicular to the vehicle longitudinal and transverse directions X, Y and is configured to be circumscribed inside a rectangle.

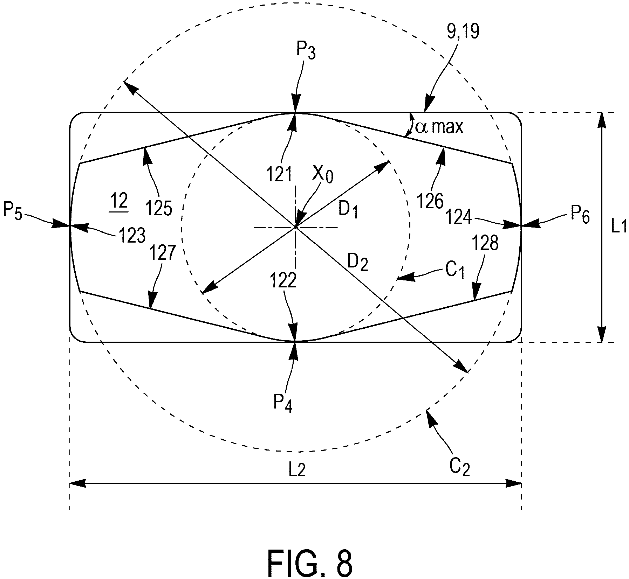

As illustrated in **FIG. 8**, the left centering pin 12 is defined by upper and lower curved peripheral areas 121, 122 and left and right curved peripheral areas 123, 124, the upper and lower curved peripheral areas 121, 122 having, in a section plane parallel to the vertical plane, a circular arc shape inscribed in a first circle C1, the diameter D1 of the first circle C1 corresponding substantially to the dimension L1 of the left positioning holes 9, 19 along a vehicle vertical direction, and the left and right curved peripheral areas 123, 124 having, in a section plane parallel to the vertical plane, a circular arc shape inscribed in a second circle C2, the diameter D2 of the second circle C2 corresponding substantially to the dimension L2 of the left positioning holes 9, 19 along a vehicle transverse direction. The upper curved peripheral area 121 is linked to the left and right curved peripheral areas 123, 124, respectively, via upper left and right planar peripheral areas 125, 126, and the lower curved peripheral area 122 is linked to the left and right curved peripheral areas 123, 124, respectively, via lower left and right planar peripheral areas 127, 128.

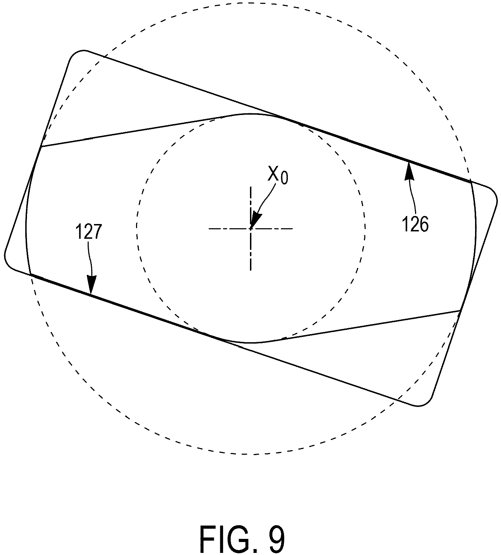

As shown in **FIG. 8**, the first and the second circles C1, C2 have the same center X0. Thus configured, the crosspiece 1 and the body-in-white 4 may thus rotate clockwise relative to the left centering pin 12 around a longitudinal axis passing through said center X0 to reach a second position shown in **FIG. 9**, in which they have pivoted at an angle αₘₐₓ relative to their position in Fig. 8. In this second position, the upper right planar peripheral area 126 and the lower left planar peripheral area 127 of the centering pin 12 abut against the crosspiece 1 and the body-in-white 4. This second mounting position may occur if the crosspiece 1 and the body-in-white 4 are not straight or sag relative to their ideal mounting position illustrated in Fig. 8.

It is clear that the centering pin 12 is also adapted to be inserted in the left positioning holes 9, 19 for any intermediate positions thereof between the ideal mounting position illustrated in Fig. 8 and the second position illustrated in Fig. 9.

Moreover, the crosspiece 1 and the body-in-white 4 may also rotate counterclockwise relative to the left centering pin 12 around a longitudinal axis passing through the center X0 to reach a third position (not shown), in which they have pivoted at an angle αₘₐₓ relative to their position in Fig. 8. In this third position, the upper left planar peripheral area 125 and the lower right planar peripheral area 128 abut against the crosspiece 1 and the body-in-white 4.

It is clear that the centering pin 12 is also adapted to be inserted in the left positioning holes 9, 19 for any intermediate positions thereof between the ideal mounting position illustrated in Fig. 8 and said third position.

Thus configured, the tool 10 avoids wear of the centering pins during the insertion of the centering pins in the corresponding positioning holes of the crosspiece 1 and the body-in-white 4 whatever the positions of the crosspiece 1 and the body-in-white 4 relative to their ideal mounting position illustrated in Fig. 8.

In a preferred embodiment of the invention, the left centering pin 12 and the right centering pin 12' may be removably attached to the support plate 11. Accordingly, the tool 10 may be easily modified to invert the positions of the left and right centering pins 12, 12', as illustrated in **FIG. 6a** and **FIG. 6b,** and **FIG. 7a** and **FIG. 7b****.**

In this alternative embodiment, the tool 10 comprises a left centering pin 12' and a right centering pin 12 extending along a longitudinal direction. The centering pins 12', 12 are configured to be respectively inserted into the left, respectively the right, positioning holes 9, 19, 9', 19' formed respectively in the crosspiece 1 and the body-in-white 4 in the mounting position of the tool 10, illustrated in Figs 6a and 6b.

As shown in Figs 7a and 7b, the left centering pin 12' has a cylindrical shape and is configured to contact the crosspiece 1, respectively the body-in-white 4, in two points P1, P2 aligned in a vehicle vertical direction in the mounting position of the tool 10, thus preventing a movement of the left centering pin 12' relative to the crosspiece 1 and the body-in-white 4 along said vehicle vertical direction, and the right centering pin 12 has a trapezoid shape that is partially complementary to the shape of the right positioning holes 9', 19' and is configured to contact the crosspiece 1, respectively the body-in-white 4, in two points P3, P4 aligned in a vehicle vertical direction and in two points P5, P6 aligned in a vehicle transverse direction in the mounting position of the tool 10, thus preventing a movement of the right centering pin 12 relative to the crosspiece 1 and the body-in-white 4 along said vehicle vertical direction and said vehicle transverse direction.

The right centering pin 12 having the specific shape shown in Fig. 8, and the right positioning holes 9', 19' of the crosspiece 1 and of the body-in-white 4 having the same shape as the left positioning holes 9, 19 thereof, the crosspiece 1 and the body-in-white 4 may thus rotate clockwise relative to the right centering pin 12 around a longitudinal axis passing through the center X0 to reach a second position, shown in Fig. 9, in which the crosspiece 1 and the body-in-white 4 have pivoted at an angle αₘₐₓ relative to their position in Fig. 8, or any intermediate positions between the position illustrated in Fig. 8 and this second position. In the same way, the crosspiece 1 and the body-in-white 4 may also rotate counterclockwise relative to the right centering pin 12 around a longitudinal axis passing through the center X0 to reach a third position (not shown), in which the crosspiece 1 and the body-in-white 4 have pivoted at an angle αₘₐₓ relative to their position in Fig. 8, or any intermediate positions between the position illustrated in Fig. 8 and this third position.

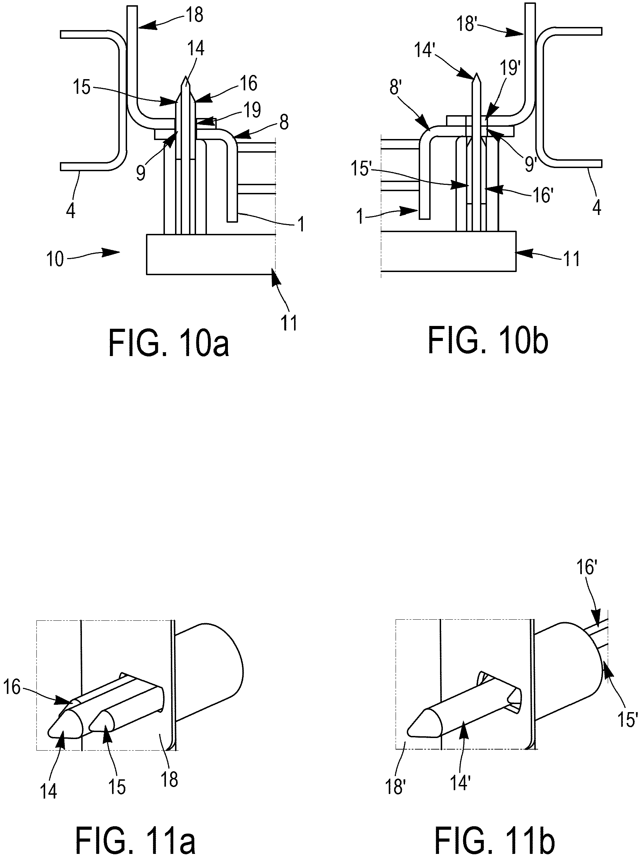

In a further alternative embodiment illustrated in **FIG. 10a** and **FIG. 10b****,** the tool 10 comprises a support plate 11 extending in a vertical plane, and two sets of spindles, respectively a left set comprising a first left spindle 14, a second left spindle 15, and a third left spindle 16, and a right set comprising a first right spindle 14', a second right spindle 15', and a third right spindle 16'. The first left spindle 14, respectively the first right spindle 14', is fixedly attached to the support plate 11 and the second and third left spindles 15, 16, respectively the second and third right spindles 15', 16', are slidably fixed to the support plate 11 such that they are movable between a deployed position, shown in **FIG. 11a**, in which they extend at both sides of a top portion of the first left spindle 14, respectively of the first right spindle 14', and a retracted position, shown in **FIG. 11b**, in which they extend at both sides of a bottom portion of the first left spindle 14, respectively of the first right spindle 14'.

In the mounting position of the tool illustrated in Figs 10a and 10b, the second and third left spindles 15, 16 are in their deployed position and the second and third right spindles 15', 16' are in their retracted position. Thus positioned, the second and third left spindles 15, 16 are configured to be housed into the left positioning holes 9, 19 formed respectively in the left mounting interfaces 8, 18 of the crosspiece 1 and the body-in-white 4, and the second and third right spindles 15', 16' are configured to be out of the right positioning holes 9', 19' formed respectively in the right mounting interfaces 8', 18' of the crosspiece 1 and the body-in-white 4.

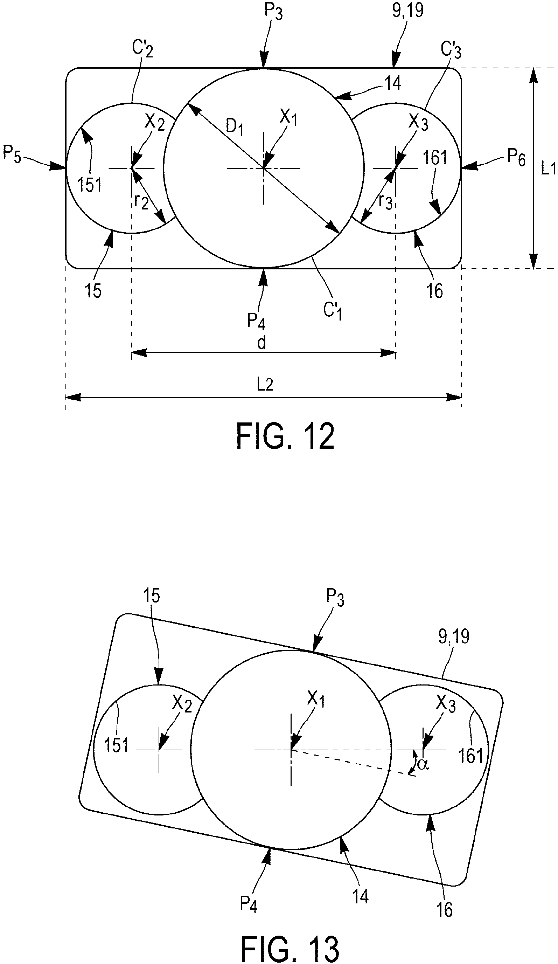

As illustrated in **FIG. 12**, the first left spindle 14 has a cylindrical shape defined by a peripheral area C1' and a longitudinal axis X1, the diameter D1 of the first left spindle 14 corresponding substantially to the dimension L1 of the left positioning holes 9, 19 along a vehicle vertical direction, the peripheral area C1' contacting the crosspiece 1 and the body-in-white 4 in two points P3, P4 aligned in a vehicle vertical direction in the mounting position of the tool 10, thus preventing a movement of the first left spindle 14 relative to the crosspiece 1 and the body-in-white 4 along said vehicle vertical direction.

The second left spindle 15 has a substantially hemi-cylindrical shape defined by a left curved peripheral area 151 having, in a sectional vertical plane, a circular arc shape inscribed in a circle C2', said circle C2' having a center X2 and a first radius r2. The third left spindle 16 has a substantially hemi-cylindrical shape defined by a right curved peripheral area 161 having, in a sectional vertical plane, a circular arc shape inscribed in a circle C3', said circle C3' having a center X3 and a radius r3.

In a specific embodiment, the radius r3 may be equal to the radius r2.

The second and third left spindles 15, 16 may advantageously be configured so that the distance d between the centers X2 and X3 is substantially equal to the dimension L2 of the left positioning holes 9, 19 along a vehicle transverse direction minus the radii r2 and r3.

Thus configured, the second left spindle 15 contacts the crosspiece 1, respectively the body-in-white 4, in one point P5 and the third left spindle 16 contacts the crosspiece 1, respectively the body-in-white 4, in one point P6, the points P5 and P6 being aligned in a vehicle transverse direction in the mounting position of the tool 10, thus preventing a movement of the second and third left spindles 15, 16 relative to the crosspiece 1 and the body-in-white 4 along said vehicle transverse direction.

The crosspiece 1 and the body-in-white 4 may rotate clockwise relative to the first left spindle 14 around the longitudinal axis X1 to reach the position shown in **FIG. 13**, in which the crosspiece 1 and the body-in-white 4 have pivoted at an angle α relative to their position in Fig. 12. In this position, the left curved peripheral area 151 of the second left spindle 15 and the right curved peripheral area 161 of the third left spindle 16 are no longer in contact with the crosspiece 1 and the body-in-white 4.

Thus configured, the tool 10 avoids wear of the spindles during the insertion of the spindles in the corresponding positioning holes of the crosspiece 1 and the body-in-white 4 whatever the positions of the crosspiece 1 and the body-in-white 4 relative to their ideal mounting position illustrated in Fig. 12.

It is clear that the embodiment shown in Figs 10a and 10b may be easily modified by inverting the positions of the second and third left and right spindles 15, 16 and 15', 16'. In particular, the second and third left spindles 15, 16 may be moved in their retracted position and the second and third right spindles 15', 16' may be moved in their deployed position. This modified embodiment may be adapted for RHD vehicle.

Regardless of the tool variant used, the method for mounting a cockpit 3 to a body-in-white 4 of a motor vehicle cab may comprise the following steps:
- moving the tool 10 until the left, respectively right, centering pin 12, 12', or set of spindles 14-16, 14'-16', is inserted in the left, respectively right, positioning hole 9, 9' of the crosspiece 1 ;
- moving the tool 10, holding the crosspiece 1, until the left, respectively right, centering pin 12, 12', or set of spindles 14-16, 14'-16', is inserted in the left, respectively right, positioning hole 19, 19' of the body-in-white 4 ;
- fastening the crosspiece 1 to the body-in-white 4 ;
- moving the tool 10 along a longitudinal axis until the the left, respectively right, centering pin 12, 12', or set of spindles 14-16, 14'-16', is out of the left, respectively right, positioning holes 9, 9', 19, 19' of the crosspiece 1 and of the body-in-white.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

In particular, the shape of the left and right positioning holes formed in the crosspiece and the body-in-white may vary and may, for example, be oblong or circular.

## Claims

**1.** A tool (10) for mounting a cockpit (3) to a body-in-white (4) of a motor vehicle cab (5), the cockpit (3) comprising a crosspiece (1) extending in a vehicle transverse direction (Y) and a dashboard (2), the tool (10) comprising:
- a support plate (11);
- a left centering pin (12, 12', 14-16) extending in a longitudinal direction (X) perpendicular to the support plate and configured to be inserted into two corresponding left positioning holes (9, 19) formed respectively in the crosspiece (1) and the body-in-white (4) ;
- a right centering pin (12, 12', 14'-16') extending in a direction (X) perpendicular to the support plate and configured to be inserted into two corresponding right positioning holes (9', 19') formed respectively in the crosspiece (1) and the body-in-white (4);
wherein one of the said left centering pin (12, 12', 14-16) and said right centering pin (12, 12', 14'-16') has a circular cross-section and the other of said left centering pin (12, 12', 14-16) and said right centering pin (12, 12', 14'-16') has a special cross-section having its greatest overall dimension parallel to the vehicle transverse direction (Y).

**2.** The tool (10) of claim 1, wherein the other one of the said left centering pin (12, 12') and of the said right centering pin (12, 12') is defined by upper and lower curved peripheral areas (121, 122) and left and right curved peripheral areas (123, 124), the upper and lower curved peripheral areas (121, 122) having, in a section plane parallel to the vertical plane, a circular arc shape inscribed in a first circle (C1), the diameter (D1) of the first circle (C1) corresponding substantially to the dimension (L1) of the corresponding left or right positioning holes (9, 19; 9', 19') along a vehicle vertical direction (Z), and the left and right curved peripheral areas (123, 124) having, in a section plane parallel to the vertical plane, a circular arc shape inscribed in a second circle (C2), the diameter (D2) of the second circle (C2) corresponding substantially to the dimension (L2) of the corresponding left or right positioning holes (9, 19; 9', 19') along a vehicle transverse direction (Y).

**3.** The tool (10) of claim 2, wherein the upper, respectively the lower, curved peripheral area (121, 122) is linked to the left, respectively the right, curved peripheral area (123, 124) via a planar peripheral area (125-128).

**4.** The tool (10) of any of claims 2-3, wherein the first and the second circles (C1, C2) have the same center (X0).

**5.** The tool (10) of any of claims 1-4, wherein the left centering pin (12, 12') and the right centering pin (12, 12') are removably attached to the support plate (11).

**6.** The tool (10) of claim 1, wherein the left centering pin or the right centering pin is made of a first, a second and a third parallel spindles (14-16; 14'-16'), wherein the first spindle (14, 14') is fixedly attached to the support plate (11) and the second and third spindles (15,16; 15',16') are slidably fixed to the support plate (11) such that they are movable between a deployed position, in which they extend at both sides of a top portion of the first spindle (14, 14'), and a retracted position, in which they extend at both sides of a bottom portion of the spindle (14, 14').

**7.** The tool (10) of claim 6, wherein the second and third spindles (15, 16; 15', 16') are configured to be housed into the left or right positioning hole (9, 19; 9', 19') formed respectively in the crosspiece (1) and the body-in-white (4) in the mounting position of the tool and when they are in their deployed position, and to be out of said left or right positioning hole (9, 19; 9', 19') in the mounting position of the tool and when they are in their retracted position.

**8.** The tool (10) of any of claims 6-7, wherein the first spindle (14, 14') has a cylindrical shape, the diameter (D1) of the first spindle (14, 14') corresponding substantially to the dimension (L1) of the left or right positioning hole (9, 19; 9', 19') along a vehicle vertical direction (Z),
wherein the second spindle (15, 15') is defined by a left curved peripheral area (151) having, in a section plane parallel to the vertical plane, a circular arc shape inscribed in a first circle (C2'), said first circle (C2') having a first center (X2) and a first radius (r2),
wherein the third spindle (16, 16') is defined by a right curved peripheral area (161) having, in a section plane parallel to the vertical plane, a circular arc shape inscribed in a second circle (C3'), said second circle (C3') having a second center (X3) and a second radius (r3), and
wherein the distance (d) between the first and the second centers (X2, X3) is substantially equal to the dimension (L2) of the left or right positioning hole (9, 19; 9', 19') along a vehicle transverse direction (Y) minus the first and second radii (r2, r3).

**9.** The tool (10) of claim 8, wherein the first and the second circles (C2', C3') have the same radius.

**10.** The tool (10) of any previous claim, wherein the special cross-section has two axes of symmetry that are crossing by the center of the section and that are respectively parallel to the vehicle transverse direction (Y) and to a vertical axis (Z) perpendicular to the vehicle longitudinal and transverse directions (X, Y).

**11.** The tool (10) of any previous claim, wherein each of the left and right centering pins (12, 12') or each spindle (14-16; 14'-16') has a tapered end for optimum engagement into the corresponding positioning holes (9, 19; 9', 19').

**12.** The tool (10) of any previous claim, wherein the special cross-section is such that it can be circumscribed inside a rectangle.

**13.** A method for mounting a cockpit (3) to a body-in-white (4) of a motor vehicle cab (5), the cockpit (3) comprising a crosspiece (1) extending in a vehicle transverse direction (Y) and a dashboard (2), the crosspiece (1) and the body-in-white (4) being respectively provided with left and right positioning holes (9, 19; 9', 19'), said left and right positioning holes (9, 19; 9', 19') having preferably an oblong shape and being preferably defined by a larger dimension (L2) along a vehicle transverse direction (Y) than along a vehicle vertical direction (Z), the method comprising:
- moving a tool (10) according to any one of claims 1-12 until the left, respectively right, centering pin (12, 12'; 14-16, 14') is inserted in the left, respectively right, positioning hole (9, 19; 9', 19') of the crosspiece (1) ;
- moving the tool (10), holding the crosspiece, until the left, respectively right, centering pin (12, 12'; 14-16, 14') is inserted in the left, respectively right, positioning hole (9, 19; 9', 19') of the body-in-white (4),;
- fastening the crosspiece (1) to the body-in-white (4) ;
- moving the tool (10) along a longitudinal axis (X) until the left, respectively right, centering pin (12, 12'; 14-16, 14') is out of the left, respectively right, positioning holes (9, 19; 9', 19') of the crosspiece (1) and of the body-in-white (4).
13. A motor vehicle cab (5) comprising a body-in-white (4) and a dashboard (2) fixedly connected thereto through a crosspiece (1) extending in a vehicle transverse direction (Y), wherein the crosspiece (1) and the body-in-white (4) each comprises a left mounting interface (8, 18) and a right mounting interface (8', 18'), said left mounting interface (8, 18), respectively said right mounting interface (8', 18'), being provided with a left positioning hole (9, 19), respectively a right positioning hole (9', 19'), said left and right positioning holes (9, 9', 19, 19') having each an oblong shape.

**14.** The motor vehicle cab (5) of claim 13, wherein the oblong shape of the left and right positioning holes (9, 9', 19, 19') is defined by a larger dimension along the vehicle transverse direction (Y) than along a vehicle vertical direction (Z).

**15.** The motor vehicle cab (5) of claim 13 or 14, wherein the left and right positioning holes (19, 19') of the body-in-white (4) have the same shape as the left and right positioning holes (9, 9') of the crosspiece (1).

**16.** The motor vehicle cab (5) of any of claims 13-15, wherein the left and right positioning holes (9, 9', 19, 19') of the crosspiece (1) and of the body-in-white (4) have a substantially rectangular shape in a section plane perpendicular to a vehicle longitudinal direction.

**17.** A motor vehicle comprising a motor vehicle cab (5) according to any of claims 13-16.
